# EUROPEAN PATENT APPLICATION

(11) **EP 4 336 704 A1**
(43) Date of publication of application: **13.03.2024**
(21) Application number: 22194387.1
(22) Date of filing: 07.09.2022
(51) Int. Cl.: H02J 9/06, H02J 3/00, H02J 3/38, H02J 3/48, H02M 1/32

(54) **POWER SUPPLY ASSEMBLY**

(71) Applicant: ABB SCHWEIZ AG, 5400 Baden (CH)
(72) Inventor: Paatero, Esa-Kai, 00300 Helsinki (FI); Notari, Nicola, 6925 Gentilino (CH)
(74) Representative: Kolster Oy Ab

(57) **Abstract**

A power supply assembly comprising a source converter (81), a load converter (82) having an upper limit current value (I_{82,lim}), a DC link (2) comprising DC link capacitance, direct current connections of the source converter (81) and the load converter (82) being electrically connected to the DC link (2), and a control system (909) adapted to control the load converter (82) such that current of the load converter (82) is less than or equal to a control limit current value (I_{cmax,82}). During normal operating conditions, the control limit current value (I_{cmax,82}) is equal to the upper limit current value (I_{82,lim}) of the load converter (82). As a response to a predetermined fault situation, the control limit current value (I_{cmax,82}) is decreased to a value lower than the upper limit current value (I_{82,lim}) of the load converter (82).

## Description

### FIELD OF THE INVENTION

The present invention relates to a power supply assembly.

### BACKGROUND OF THE INVENTION

A known power supply assembly comprises a source converter, a load converter, and a DC link electrically connecting the source converter and the load converter. The source converter is adapted to maintain a predetermined link voltage in the DC link. The source converter has an upper limit power value which represents a power the source converter is capable of transferring to the DC link. The load converter has an upper limit current value, which represents a current the load converter is capable of transferring to a load of the power supply assembly. A protection system of the power supply assembly is adapted to detect a fault situation if current of the load converter exceeds the upper limit current value of the load converter.

One of the problems associated with the above known power supply assembly is that if a load wiring connecting the load converter to the load is very long, and a fault occurs far from the load converter, then a current drawn from the load converter by the fault is below the upper limit current value of the load converter while a power of the source converter is above an upper limit power value of the source converter. Due to the fault, the source converter is not capable of maintaining the predetermined link voltage in the DC link, and the voltage of the DC link starts to decrease. In the worst case, the DC link collapses, and the power supply assembly has to be turned off before the protection system clears the fault.

### BRIEF DESCRIPTION OF THE INVENTION

An object of the present invention is to provide a power supply assembly so as to solve the above problems. The objects of the invention are achieved by a power supply assembly which is characterized by what is stated in the independent claim. The preferred embodiments of the invention are disclosed in the dependent claims.

The invention is based on the idea of decreasing, in a predetermined fault situation, a current of the load converter below a value the load converter is capable of supplying. Decreasing the current of the load converter also decreases the power of the source converter thereby enabling the source converter to maintain the predetermined link voltage in the DC link.

An advantage of the power supply assembly of the invention is that the power supply assembly is able to remain in operation even in cases in which a fault occurs far from the load converter, and a wire resistance between the output of the load converter and the fault is high.

### BRIEF DESCRIPTION OF THE DRAWINGS

In the following the invention will be described in greater detail by means of preferred embodiments with reference to the attached drawings, in which
Figure 1 shows a circuit diagram of a power supply assembly according an embodiment of the present invention; and
Figure 2 shows electrical quantities of the power supply assembly of Figure 1 in connection with a fault situation.

### DETAILED DESCRIPTION OF THE INVENTION

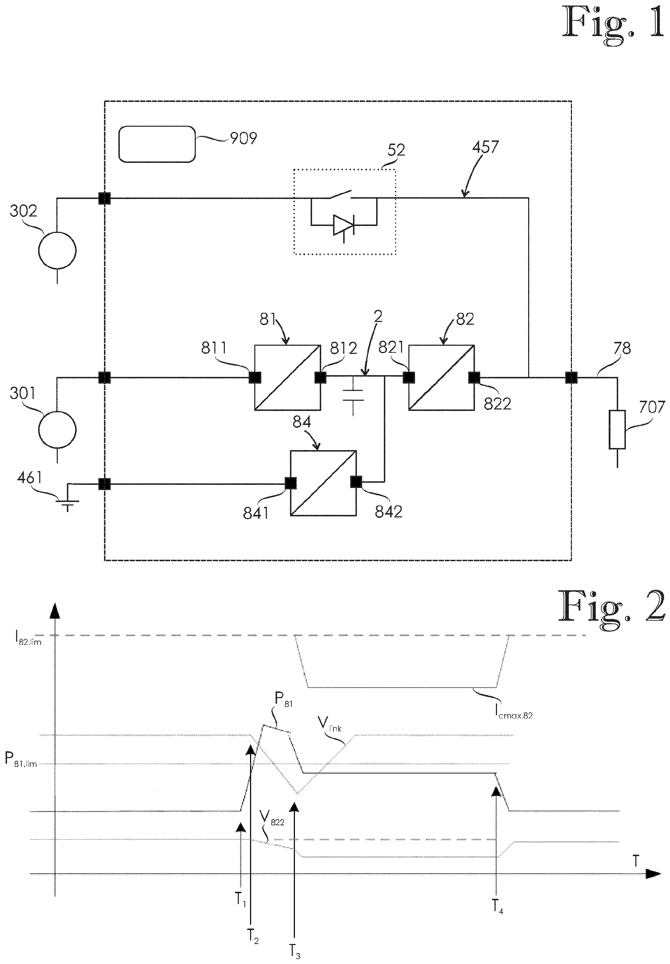

Figure 1 shows a power supply assembly comprising a source converter 81, a load converter 82, a direct current converter 84, a DC link 2, a control system 909, a load wiring 78, and an energy saving transfer route 457. The source converter 81 comprises an alternating current connection 811 adapted to be connected to an alternating current supply, and a direct current connection 812. The load converter 82 comprises a direct current connection 821, and an alternating current connection 822 adapted to be connected to a load 707 through the load wiring 78. The DC link 2 comprises DC link capacitance, and electrically connects the direct current connection 812 of the source converter 81 to the direct current connection 821 of the load converter 82. The direct current converter 84 is a DC-to-DC converter electrically connected to a direct current supply 461 and the DC link 2.

The source converter 81 is adapted for supplying power from the alternating current connection 811 to the DC link 2. The load converter 82 is adapted for supplying power from the DC link 2 to the alternating current connection 822. The load converter 82 is a current limited device.

A rated voltage of the alternating current connection 822 of the load converter 82 is 3kV. In an alternative embodiment, a rated voltage of the alternating current connection of the load converter is greater than or equal to 100V.

A rated power of the load converter 82 is 30kVA. In an alternative embodiment, a rated power of the load converter is greater than or equal to 1kVA.

The energy saving transfer route 457 is adapted to electrically connect an alternating current supply to the load 707. The energy saving transfer route 457 bypasses the source converter 81, the DC link 2 and the load converter 82. The energy saving transfer route 457 comprises a bypass switch 52 adapted to disconnect an electrical connection between the alternating current supply of the energy saving transfer route 457 and the load 707.

The alternating current connection 811 of the source converter 81 is electrically connected to a first alternating current supply 301. The energy saving transfer route 457 is electrically connected to a second alternating current supply 302. In an alternative embodiment the alternating current connection of the source converter and the energy saving transfer route are electrically connected to a common alternating current supply.

The control system 909 is adapted to control the source converter 81, the load converter 82, the direct current converter 84, and the bypass switch 52. The control system 909 is adapted to obtain information relating to an instantaneous power of the source converter 81, information relating to an instantaneous current of the load converter 82, and information relating to an instantaneous voltage of the DC link 2.

The control system 909 is adapted to control the load converter 82 such that current of the load converter 82 is less than or equal to a control limit current value I_{cmax,82}. During normal operating conditions, the control limit current value I_{cmax,82} is equal to an upper limit current value I_{82,lim} of the load converter 82.

As a response to a predetermined fault situation, the control limit current value I_{cmax,82} is decreased to a value lower than the upper limit current value I_{82,lim} of the load converter 82. The control system 909 is adapted to determine the decreased control limit current value I_{cmax,82} based on information relating to an electrical state of the power supply assembly during the predetermined fault situation. The decreased control limit current value I_{cmax,82} is a continuously variable signal. In an alternative embodiment, the decreased control limit current value is adjusted in discrete steps.

After the predetermined fault situation is over, the control limit current value I_{cmax,82} is restored to the upper limit current value I_{82,lim} of the load converter 82. An example of the predetermined fault situation is a short circuit in the load wiring 78.

The predetermined fault situation can end due to different reasons. In an embodiment, the power supply assembly comprises a protective device adapted to clear the predetermined fault. The protective device can comprise for example a fuse.

In an embodiment, the value to which the control limit current value is decreased as a response to the predetermined fault situation, is less than or equal to 90% of the upper limit current value of the load converter. In another embodiment, the value to which the control limit current value is decreased as a response to the predetermined fault situation, is a function of at least one variable. The at least one variable may comprise an ambient temperature of the power supply assembly, for example, wherein a lower ambient temperature of the power supply assembly allows higher control limit current value. In a further embodiment, during the predetermined fault situation, the control limit current value is dynamically adjusted as a response to changes in an electrical state of the power supply assembly.

In an embodiment, an upper limit power value of the source converter is the rated power of the source converter, and the upper limit current value of the load converter is the rated current of the load converter. In this embodiment, the control system is adapted, as a response to a predetermined fault situation, to limit the current of the load converter below the rated value thereof in order to decrease a power drawn by the load converter from the DC link. In an alternative embodiment, the upper limit power value of the source converter is a maximum power the source converter is capable of supplying from the alternating current connection to the direct current connection thereof.

The predetermined fault situation can be detected in various ways. In an embodiment, the predetermined fault situation comprises a situation where a power of the source converter exceeds the upper limit power value of the source converter. In another embodiment, the predetermined fault situation comprises a situation where the voltage of the DC link drops below a lower limit voltage value of the DC link.

The lower limit voltage value of the DC link is lower than the predetermined link voltage in the DC link, which the source converter is trying to maintain. In an embodiment, the lower limit voltage value of the DC link is less than or equal to 90% of the predetermined link voltage in the DC link.

Figure 2 shows electrical quantities of the power supply assembly of Figure 1 in connection with a fault situation. The fault situation starts at time T₁, and a power Psi of the source converter 81 begins to increase. At time T₂, the upper limit power value P_{81,lim} of the source converter is exceeded, and both the voltage Vₗᵢₙₖ of the DC link 2 and a voltage V₈₂₂ present at the alternating current connection 822 of the load converter 82 start to decrease. Starting from time T₃, the control limit current value I_{cmax,82} is decreased to a value lower than the upper limit current value I_{82,lim} of the load converter 82, and the voltage Vₗᵢₙₖ of the DC link 2 starts to recover. At time T₄, the fault situation ends, the voltage V₈₂₂ at the alternating current connection 822 of the load converter 82 starts to recover, the power Psi of the source converter 81 begins to decrease, and the control limit current value I_{cmax,82} begins to increase back towards the upper limit current value I_{82,lim} of the load converter 82.

It is possible to utilize the energy saving transfer route 457 for lowering powers passing through the source converter 81, the DC link 2 and the load converter 82. In an embodiment, during the predetermined fault situation, the control system is adapted to control the load converter and the bypass switch such that the load is supplied at least temporarily and/or partially through the energy saving transfer route.

In another embodiment, during the predetermined fault situation, the control system is adapted to control the direct current converter such that the load is supplied at least temporarily and/or partially through the direct current converter. Supplying power to the load through the energy saving transfer route and/or the direct current converter decreases a power of the source converter. Therefore, during the predetermined fault situation, supplying power to the load through the energy saving transfer route and/or the direct current converter can be used in addition to the decreasing of the control limit current value.

In an embodiment, a length of the load wiring is greater than or equal to 1000m. Such lengths of load wiring are typical for example in control systems for transportation. In railroad systems, a length of the load wiring can be tens of kilometers from the load converter to a load device furthest off.

It will be obvious to a person skilled in the art that the inventive concept can be implemented in various ways. The invention and its embodiments are not limited to the examples described above but may vary within the scope of the claims.

## Claims

1. A power supply assembly comprising:
a source converter (81) comprising an alternating current connection (811) adapted to be connected to an alternating current supply, and a direct current connection (812), wherein the source converter (81) has an upper limit power value (P_{81,lim});
a load converter (82) comprising a direct current connection (821), and an alternating current connection (822) adapted to be connected to a load (707), wherein the load converter (82) has an upper limit current value (I_{82,lim});
a DC link (2) comprising DC link capacitance, the direct current connections of the source converter (81) and the load converter (82) being electrically connected to the DC link (2); and
a control system (909) adapted to control the load converter (82) such that current of the load converter (82) is less than or equal to a control limit current value (I_{cmax,82}), wherein during normal operating conditions the control limit current value (I_{cmax,82}) is equal to the upper limit current value (I_{82,lim}) of the load converter (82),
**characterized in that** as a response to a predetermined fault situation, the control limit current value (I_{cmax,82}) is decreased to a value lower than the upper limit current value (I_{82,lim}) of the load converter (82).

2. The power supply assembly according to claim 1, wherein the control system (909) is adapted to obtain information relating to an instantaneous power of the source converter (81), and the predetermined fault situation comprises a situation where the instantaneous power of the source converter (81) exceeds the upper limit power value (P_{81,lim}) of the source converter (81).

3. The power supply assembly according to claim 1 or 2, wherein the control system (909) is adapted to obtain information relating to a voltage of the DC link (2), and the predetermined fault situation comprises a situation where the voltage of the DC link (2) drops below a lower limit voltage value of the DC link (2).

4. The power supply assembly according to any one of the preceding claims, wherein during the predetermined fault situation, the control limit current value (I_{cmax,82}) is dynamically adjusted as a response to changes in an electrical state of the power supply assembly.

5. The power supply assembly according to any one of the preceding claims, wherein after the predetermined fault situation is over, the control limit current value (I_{cmax,82}) is restored to the upper limit current value (I_{82,lim}) of the load converter (82).

6. The power supply assembly according to any one of the preceding claims, wherein the power supply assembly comprises an energy saving transfer route (457) adapted to electrically connect an alternating current supply to the load (707), the energy saving transfer route (457) bypassing the source converter (81), the DC link (2) and the load converter (82), wherein the energy saving transfer route (457) comprises a bypass switch (52) adapted to disconnect an electrical connection between the alternating current supply and the load (707), the bypass switch (52) being controllable by the control system (909).

7. The power supply assembly according to claim 6, wherein during the predetermined fault situation, the control system (909) is adapted to control the load converter (82) and the bypass switch (52) such that the load (707) is supplied at least temporarily through the energy saving transfer route (457).

8. The power supply assembly according to any one of the preceding claims, wherein as a response to the predetermined fault situation, the control limit current value (I_{cmax,82}) is decreased to a value less than or equal to 90% of the upper limit current value (I_{82,lim}) of the load converter (82).

9. The power supply assembly according to any one of the preceding claims, wherein the power supply assembly comprises a load wiring (78) through which the alternating current connection (822) of the load converter (82) is adapted to be connected to the load (707), wherein a length of the load wiring (78) is greater than or equal to 1000m.

10. The power supply assembly according to any one of the preceding claims, wherein the upper limit power value (P_{81,lim}) of the source converter (81) is the rated power of the source converter (81), and/or the upper limit current value (I_{82,lim}) of the load converter (82) is the rated current of the load converter (82).
